# EUROPEAN PATENT SPECIFICATION

(11) **EP 3 103 291 B1**
(45) Date of publication and mention of the grant of the patent: **05.09.2018**
(21) Application number: 14708030.3
(22) Date of filing: 05.03.2014
(51) Int. Cl.: H04W 52/02

(54) **USER AND ACCESS NODE DEVICES, AND A COMMUNICATION SYSTEM**
BENUTZER- UND ZUGANGSKNOTENVORRICHTUNGEN, SOWIE KOMMUNIKATIONSSYSTEM
DISPOSITIFS D'UTILISATEUR ET DE NOEUD D'ACCÈS, ET SYSTÈME DE COMMUNICATIONS

(43) Date of publication of application: 14.12.2016
(73) Proprietor: Huawei Technologies Co., Ltd., Longgang District Shenzhen, Guangdong 518129 (CN)
(72) Inventor: LUNDQVIST, Henrik, S-16440 Kista (SE); KOUDOURIDIS, George, S-16440 Kista (SE); KELA, Petteri, S-16440 Kista (SE); LEPPANEN, Kari Juhani, S-16440 Kista (SE); KRENDZEL, Andrey, S-16440 Kista (SE)
(74) Representative: Thun, Clemens
(86) International application number: PCT/EP2014/054265
(87) International publication number: WO 2015/131942

(56) References cited:
- EP-A1- 2 018 020
- WO-A1-03/075586
- WO-A2-2013/032139
- US-A- 5 881 055

## Description

### Technical Field

The present invention relates to a user device and an access node device of a communication system. Furthermore, the present invention also relates to a corresponding method in a user node, a corresponding method in an access node, a communication system, a computer program, and a computer program product.

### Background

For example, WO 2013/032139A2 refers to a method and apparatus of transmitting a paging and wakeup frame. Further, US 5,881,055 refers to a battery saving synchronization method in a communication apparatus.

In current cellular communication systems, such as the 3GPP Long Term Evolution (LTE), the network keeps information about the approximate location of User Equipments (UEs) so that the network can initiate connections to the UE by means of so called paging. This matches the requirement that UEs shall always reachable for incoming phone calls.

Also, Internet hosts used to be reachable for incoming traffic in the original Internet protocol architecture with global addresses. However, the Internet has evolved through the introduction of Network Address Translation (NAT), fire walls and other middle boxes so that a host can no longer be assumed to be reachable by default. Internet services and applications will typically be designed with this in mind. There is therefore a possibility to make paging optional for UEs in future radio access networks. This can simplify system architecture and reduce the UE energy consumption.

In LTE the network releases the connection some time after the last packet transmission which varies based on the network configuration. The length of the time the UE remains in Radio Resource Control (RRC) connected state is a trade off between the signalling that is required to setup a new connection when needed and the additional energy consumption incurred at the UE when it needs to stay in connected mode. Proposals on UE assistance information regarding the discontinuous reception (DRX) configuration contain some ideas on how the UE can help the network to configure DRX in a way that is efficient for the applications it is running. The solution agreed in specifications only uses a single bit to signal preference for energy efficiency rather than maximum performance.

It has been proposed that the Mobility Management Entity (MME) configures the Evolved Universal Terrestrial Radio Access Network (E-UTRAN) NodeB (eNB) with a UE specific timeout value that will be used to put the UE in idle mode when the timer expires without any UE activity. This solution relies on the MME to analyze mobility and connectivity patterns and determine a suitable timeout value.

According to another prior art solution a Evolved Packet Core (EPC) configures a timer that is used to control the reachability of UEs. It sets an implicit timeout value for the UE that is larger than a back-off timer value which is signalled to the UE when a Non-Access Stratum (NAS) signalling request is rejected.

In other prior art solution connectivity timers are set based on the availability of different resources in the network, for example IP-addresses or other resources such as backhaul bandwidth.

In the IEEE 802.11 specifications there are solutions to signal in a packet whether there are more packets waiting to be transmitted. This allows the UE, referred to station (STA) in 802.11 specifications, to go to sleep as soon as there are no more packets.

Higher layer protocols, such as Session Initiation Protocol (SIP), can signal session related parameters to be used along the path. However, such protocols typically do not provide information directly to the access network to be used for configuration of the access node. That would require that a SIP aware node signals back to the access node.

The prior art solutions are intended to keep a connection energy efficient. However, when a UE connects to an access node it may have a rather accurate knowledge about its requirements. For example, a sensor node may only need to transmit UL traffic, then it may signal this to the network. Another example is UEs that do not need to be reachable for incoming traffic in general, i.e., by paging, but still need to be reachable for returning traffic related to a specific session for a short period when it connects. The period should be long enough to allow for servers on the Internet to react and send the return traffic. To get an impression of the possible energy savings from refraining from paging, measurements have indicated that with DRX cycle in RRC_IDLE of 0.6 seconds, the battery life time could be reduced by approximately two thirds with the LTE interface in idle state rather than switched off when the user device remains in a base screen off mode.

With current solutions the access network performs a significant amount of processing and signalling and setup user specific state when a user connects to the network, for example setup of tunnels, Authentication, Authorization and Accounting (AAA), and fetching and maintenance of the UE context.

### Summary

An objective of the present invention is to provide a solution which mitigates or solves the drawbacks and problems of prior art solutions.

Another objective of the present invention is to allow user devices to minimize their energy consumption by accurately controlling the instances they are accessible for incoming traffic. The object of the present invention is achieved by the features of the appended independent claims.

According to a first aspect of the invention, the above mentioned and other objectives are achieved with a user device (arranged for communicating in a wireless communication system including at least one radio access network, the user device comprising at least one processor arranged to:
one radio access network, said first information element (IE1) indicating an accessibility for data reception by said user device, wherein said first information element, IE1, further indicates a time duration *T* of the accessibility for data reception by said user device,
wherein said first information element, IE1, further indicates whether said user device is accessible for data reception during a whole of the time duration *T* or only in at least one time point of the time duration *T*.

An information element IE can be defined as an element containing one or more well defined information units. An information element according to this definition can therefore consist of multiple smaller information elements. Further, accessibility for data reception means that the user device is receiving data or control signalling transmissions over the radio interface according to protocols of a specific radio access technology with the intention of receiving and decoding any transmissions addressed to the user device. As a contrast, when the user device is not accessible, it may completely switch off its radio interface to e.g., save energy. In one example embodiment in an LTE network, the user device would be accessible when the RRC protocol is in connected state.

According to a second aspect of the invention, the above mentioned and other objectives are achieved with an access node device of a radio access network, the access node device comprising at least one processor arranged to:
receive a first signal *S*₁ comprising a first information element (IE1) from a user device; and
process said first signal *S*₁ so as to derive said first information element (IE1), said first information element (IE1) at least indicating accessibility for data reception by said user device, wherein said first information element, IE1, further indicates a time duration *T* of the accessibility for data reception by said user device,
wherein said first information element, IE1, further indicates whether said user device is accessible for data reception during a whole of the time duration *T* or only in at least one time point of the time duration *T*.

According to a third aspect of the invention, the above mentioned and other objectives are achieved by a method in a user device arranged for communicating in a wireless communication system including at least one radio access network, the method being comprising the step of:
signalling a first informafion elemen (IE1) to an access node device of the at least one radio access network, the first information element (IE1) indicating an accessibility for data reception by said user device, wherein said first information element, IE1, further indicates a time duration of the accessibility for data reception by said user device,
wherein said first information element, IE1, further indicates whether said user device is accessible for data reception during a whole of the time duration or only in at least one time point of the time duration.

According to a fourth aspect of the invention, the above mentioned and other objectives are achieved by a method in an access node device of a radio access network, the method comprising the steps of:
receiving a first signal *S*₁ comprising a first information element (IE1) from a user device; and
processing said first signal *S*₁ so as to derive said first information element (IE1), said first information element (IE1) at least indicating accessibility for data reception by said user device, wherein said first information element, IE1, further indicates a time duration of the accessibility for data reception by said user device,
wherein said first information element, IE1, further indicates whether said user device is accessible for data reception during a whole of the time duration or only in at least one time point of the time duration.

The present invention provides a mechanism for signalling accessibility for data reception by a user device in a radio access network. According to the present invention the communication network will be informed of the user device's connectivity to the network which means that the network can optimize its resource allocation and e.g., support connectionless services in a more efficient way. Thereby, paging can be reduced or fully eliminated in the communication system implying reduced signalling and improved energy consumption in the user device.

According to yet another embodiment of the present user device, said first information element (IE1) further indicates whether said user device (10) prefers connection oriented or connectionless services. The advantage of this embodiment is that the network can determine whether it shall allocate resources that are suitable for connection oriented services, or if it shall reserve resources that are adequate for connectionless services, which typically have lower demands.

According to yet another embodiment of the present user device, said first information element (IE1) further indicates whether data packets to, or from said user device (10) should be forwarded in a stateless mode over a first path being a default path, or in a stateful mode over a second path being determined by user and/or session specific information for said user device (10). This embodiment has the advantage that the network nodes can determine whether the access network shall handle user specific processing or if it shall be handled only in the core network or in the domain of a service provider. It should be noted that in some cases the paths used in the stateless mode and the stateful mode may traverse the same physical links and nodes, but be separated logically, e.g., being sent in different traffic classes, over separate bearers or tunnels, and therefore by the processing the data packets are received on the different logical paths.

According to yet another embodiment of the present user device, said first information element (IE1) further indicates mobility information for said user device (10). This has the advantage that the network nodes can determine whether it is likely that the user device remains connected to the same access node for the duration of the indicated accessibility, and can handle the routing and mobility management accordingly.

According to yet another embodiment of the present user device, said first information element (IE1) is determined based on program application(s) running on said user device (10). The advantage of this embodiment is that the accessibility and connectivity is adapted to the applications running on the user device, which allows the most energy efficient configuration that fulfils the requirements of the applications to be used. It also enables the user device to determine this locally and signal the preferred mode to the network, which can make an informed decision without the need for information about the specific applications running on the user device.

According to yet another embodiment of the present user device, the radio access network (20) is connected to an Evolved Packet Core, EPC, and said first information element (IE1) is embedded in an Attach Request, Request Bearer Resource Modification or a Triggered Service Request message. This embodiment has the advantage that the procedures in EPC networks can be made more efficient by using the accessibility information for the user device in its resource allocation.

According to an embodiment of the access node device (40), said device (40) is further arranged to: transmit data to said user device (10) according to said first information element (IE1). This embodiment has the advantage that the access node can transmit data to the user device at the time when it is accessible for data reception, while avoiding any transmissions or control signalling procedures when the user device is not accessible.

According to another embodiment of the access node device (40), said access node device (40) is further arranged to: forward said first information element (IE1) to at least one network node in the group comprising: access node, gateway node, mobility management entity, and server node. This embodiment has the advantage that also other network nodes in the network can use the accessibility of the user device to schedule their operations and to provide services to the user device while it is accessible for data reception.

According to yet another embodiment of the access node device (40), the radio access network (20) is connected to an Evolved Packet Core, EPC, and said first information element (IE1) is embedded in an Attach Request, a Request Bearer Resource Modification, a Triggered Service Request or an Initial Context Setup Request message. This embodiment has the advantage that the access node may forward the first information element IE1 to additional network nodes in the EPC, and that the access node device can both forward the first information element IE1 in NAS messages and use it in signalling over the S1 interface, to enable more efficient connectivity in EPC.

According to yet another embodiment of the access node device (40), said access node device (40) is further arranged to: transmit a second signal *S*₂ comprising a second information element (IE2) to said user device (10), said second information element (IE2) indicating a time extension of the accessibility for data reception by said user device (10). This embodiment has the advantage that the accessibility time can be dynamically extended if the transactions between user device and network have not been completed at the intended finish time.

Further applications and advantages of the invention will be apparent from the following detailed description.

### Brief Description of the Drawings

The appended drawings are intended to clarify and explain different embodiments of the present invention, in which:
- Fig. 1 illustrates a basic signalling procedure according to an embodiment of the present invention in which the first information element IE1 is propagated in the network;
- Fig. 2A and 2B illustrates first information elements IE1s according to embodiments of the present invention;
- Fig. 3 illustrates a basic signalling procedure and network signalling for time extension according to an embodiment of the present invention;

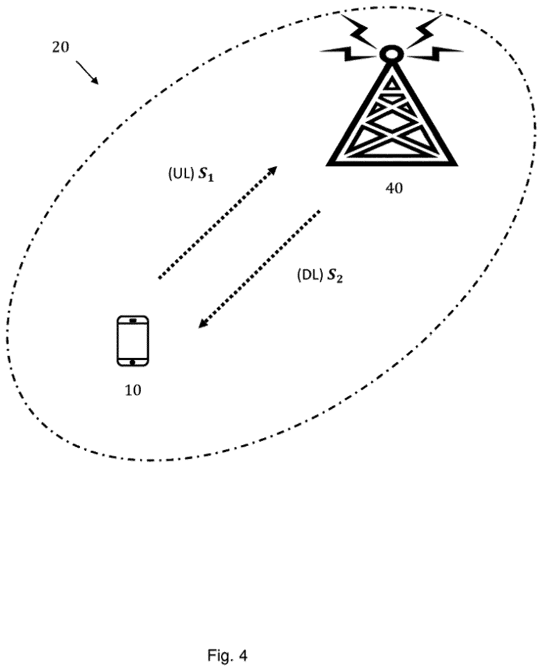

- Fig. 4 illustrates signalling between a user device and an access node device according to an embodiment of the present invention;

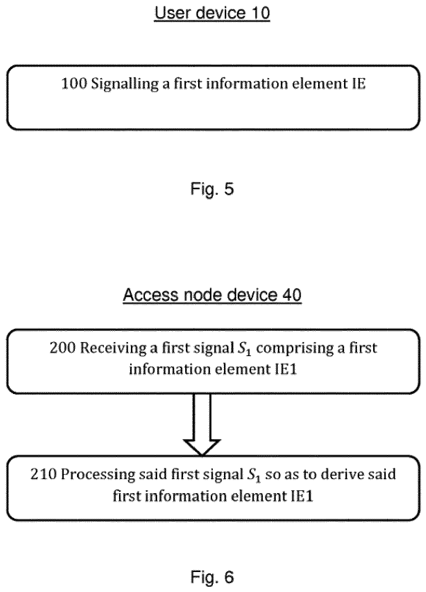

- Fig. 5 illustrates a method in a user device according to the present invention;
- Fig. 6 illustrates a method in a access node device according to the present invention;
- Fig. 7 illustrates an embodiment of a user device according to the present invention; and
- Fig. 8 illustrates an embodiment of an access node device according to the present invention.

### Detailed Description

A basic premise for the present invention is that paging can be optional in a communication network, since virtually all Internet services are designed such that a client rather than a server needs to initiate a connection. To allow the user device to receive the required connectivity in a way that is efficient for both the user device and the network the user device according to the present invention signals to the network accessibility for data reception by the user device. The signalling will allow the network to determine how much user specific context information it should keep and for how long. This e.g., enables the network to support connection-oriented and connectionless types of connectivity in efficient ways. Thereby, connectionless services can be provided with a minimum of user specific state in the access network by transmission with default Quality of Service (QoS) and routing through gateways which keep the security context for the user device. If the services are better served by non-default treatment or optimized routing that does not go through a gateway more user specific context information is required in the access network.

Current roaming procedures are designed to work well between mobile network operators with reciprocal roaming agreements. The present signalling of accessibility from the user device also supports efficient separation between access network providers and a service provider, where the service provider would be taking the final decision about which type of service the user device would receive, typically after some negotiation/signalling with the access network entities. To speed up the connection setup, allocation of resources and set up of some processes could be done in advance, before encryption keys and parameters are received from a Service Provider (SP). In this type of embodiment, the access network would determine whether to initiate state setup and negotiation with the service provider based on the signalling from the user device, or if it should just forward the data packets.

Further, the present invention allows data packets to be sent with a user specific state being set up temporarily in the access network, with an indication of how long the user device will be accessible at its current location. This will allow the user devices to minimize the energy consumption by refraining from receiving paging, while still having control of its accessibility.

The user device signalling can further indicate for how long the network should maintain the state information. This allows the network to use soft state so that the resources are released automatically after the user device leaves and manage its resources efficiently. This in particular refers to resources, such as address spaces, signalling, computing and memory that are used as soon as the user is registered or connected to an access network node. The user devices and access nodes could implement this for example by using timers that starts when a connection to the network is initiated.

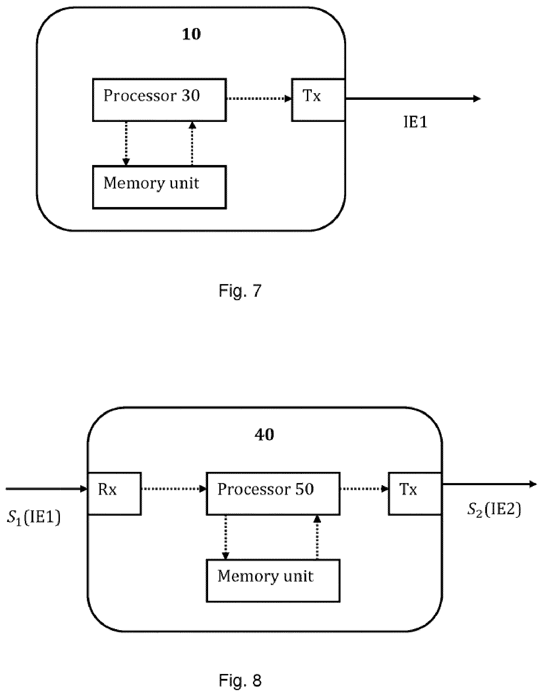

Therefore, the present user device 10 comprises at least one processor 30 arranged to signal a first information element IE1 to an access node device 40 of a radio access network 20. The first information element IE1 indicates accessibility for data reception by the user device 10. An embodiment of a user device 10 according to the present invention is illustrated in Fig. 7. The user device 10 in this embodiment comprises a processor unit 30, a memory unit coupled to the processor and a transmitter (Tx) unit. The processor is arranged to determine when to prepare a first information element IE1, and e.g., embeds the first information element IE1 in a communication protocol, and transmits it as a communication signal to an access node 40 of the network by means of the Tx unit. The user device 10 is a communication device that has at least one interface to connect to and communicate over a radio access network. The user device may e.g., be a mobile phone, a laptop, a tablet computer, a camera, a sensor device, a vehicle or an electronic appliance.

The present access node device 40 comprises at least one processor 50 arranged to receive a first signal *S*₁ comprising the first information element IE1 from the user device 10, and to process the first signal *S*₁ so as to derive the first information element IE1 for further processing. An embodiment of an access node device 40 according to the present invention is illustrated in Fig. 8. The access node device 40 in this example comprises a processor unit 50, a memory unit coupled to the processor, a receiver (Rx) unit, and a transmitter (Tx) unit. The Rx unit receives a first signal *S*₁ comprising the first information element IE1. The received signal is processed by the processor 50 so as to obtaining the first information element IE1 for further processing e.g., using the first information element IE1 as a control parameter for downlink data transmission to the user device 10. The embodiment in Fig. 8 also comprises a Tx unit so as to be able to signal a time extension request in the form of a second information element IE2 to the user device if needed. The access node device is a communication device in a wireless network that relays information between mobile devices and a computer network, such as the Internet or towards a core network, where the relaying may be over a wireless or wired backhaul network. Examples of access node devices include Universal Mobile Telecommunications System (UMTS) NB, LTE eNB, Worldwide Interoperability for Microwave Access (WiMAX) access points, and 802.11 access points.

According to an example of the present user device the signalling from the user device consists of one bit only which means that IE1 is represented by one bit in this case. This provides a simple elegant solution with very low overhead.

According to another embodiment of the present user device the first information element IE1 further indicates whether the user device 10 prefers connection oriented or connectionless services. A single bit could e.g., signal either if the user device prefers a connection oriented or a connectionless service from the network. The exact treatment of this in the network could be implementation specific. Connection oriented is a network communication mode where a communication session or a semi-permanent connection is established before any useful data is transferred, and where a stream of data is delivered in the same order as it was sent. Connectionless communication on the other hand is a data transmission method where each data packet is individually addressed and routed based on information carried in each unit.

According to yet another example the signalling from the user device to the network would consist of two or more bits. If it is assumed that it is two bits, one combination, e.g., "00", could signal a preference for pure Uplink (UL) traffic where the user device will not be reachable for Downlink (DL) traffic except for local acknowledgements; another combination, e.g., "11", would signal a user device preference for a connection oriented service where the user device will remain connected to the network until an end of the connection is signalled, or until the connection times out e.g. due to a connection error. The two remaining combinations, i.e., "01" and "10", could signal that the network should keep the user device connected for a certain time period, e.g., 0.5 seconds and 2 seconds, respectively. During this time period, or at the end of this time period the user device would be reachable for returning traffic from the network. This would allow the receiving party, e.g., a server on the Internet to send back traffic to the user device. It is clear to the skilled person that more bits could be included to give a wider choice of connection time period lengths, etc. Hence, other aspects of the information comprised in the first information element are the time period/duration T of the accessibility for data reception and more precisely whether the user device 10 is accessible for data reception during a whole of the time duration T or only at an end of the time duration T.

The corresponding time limit, possibly together with a time stamp, may be forwarded from the access network to the receiving host (which is often a server node) so that it is aware of the deadline it has to maintain to be able to reach the user device. In this process also the intermediary network nodes are able to read and use the information about the user device preferences. In particular, this information in the first information element IE1 may be useful mobility anchors or parameters (this could e.g., refer to gateway nodes in a network architecture, home agents, foreign agents or proxies in a macro mobility solution such as mobile IP), which may use this information to maintain information about where and when the user device is accessible. One example of how this can be used is that a mobility anchor may store packets destined to the user device while it is not accessible. Once the user device signals its availability the mobility anchor can forward the stored packets to the user device using the return path to the access node where the user device is temporarily connected. The mobility anchor storing the packets may be located either in the access network domain or in a different network domain, as long as the signalling from the user device reaches the anchor. A preferred case is to let the mobility anchor be a default gateway through which the traffic sent from the user device will be forwarded, since this will allow the signalling to be piggybacked on the data packet. It is clear that the mobility anchor may need to apply management policies to control the amount of stored packets either as aggregate or for individual receivers, for example by means of timeouts, garbage collection or buffer size limits.

It is not trivial for the user device to know how long time it may have to wait for a response from a server, therefore it is useful to have multiple bits to describe the preference of the timeout/connection period. It would make it possible for the user device to start with a long period and with the help of time stamps in the data packets the user device could learn, based on its history of connections in the network, the typical delay it should expect and reduce the connection time accordingly. If the connection time is found to be larger than necessary the user device may signal a shorter connection time the next time it connects to use the same service/server. If it does not receive any response within the connection time it should instead increase the connection period. In that way the connection time is optimized and therefore both the user device energy consumption and the network resource consumption are minimized. The optimization of the connection time can be made more efficient if it is guided by time stamps that indicate when a packet has been transmitted. This allows the user device to set the connection time according to the delay of the response calculated from the time stamps rather than from blind testing of different connection period lengths.

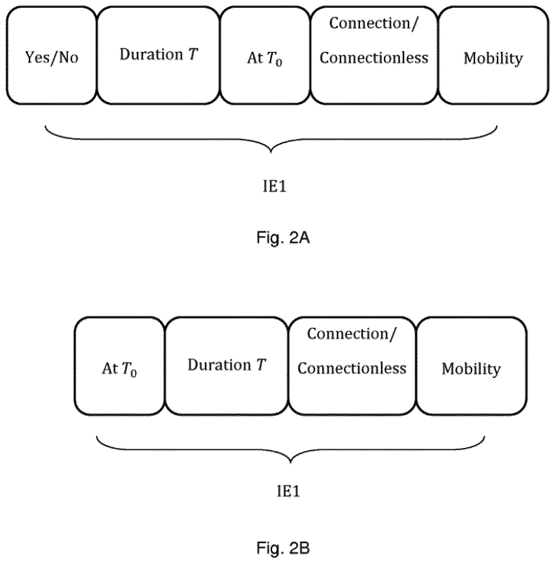

Fig. 2A and 2B illustrate two examples in which the first information element IE1 comprises different information parts/fields. In the example in Fig. 2A the first information element IE1 comprises information parts:
1. Accessible or not for data reception;
2. Duration of the accessibility *T*;
3. At which point(s) in time the user device is accessible, in this case at time *T*₀;
4. Connection oriented or connectionless services are preferred by the user device; and
5. Mobility parameters.

In the example in Fig. 2B the first information element IE1 comprises the information parts:
1. At which point in time the user device is accessible for data reception, in this case at starting time *T*₀;
2. Duration of the accessibility *T*;
3. Connection oriented or connectionless services are preferred; and
4. Mobility parameters.

It is therefore realised that the first information element IE1 may comprise different information parts/fields and that the parts/fields can be combined in different configurations depending on application and demand. It is further noted that some of the information may be implicit given depending on the configuration of the first information element IE1, e.g., the part "at which point in time the user device is accessible" also implies that the user device of course is accessible at this point in time.

Moreover, the specific user device behaviour during the connection time may be specific to the network it connects to. For example, it may be configured with discontinuous reception where it only needs to listen for DL transmissions during specific periods, or the access network may use the signalled period length and schedule the DL transmission at the end of the period. The latter possibility comes with the advantage of minimizing the time the user device is required to listen for DL transmission, and thereby reduce the energy consumption.

The specific solution to schedule the DL transmission at the end of the period may vary between different access network technologies. In an example embodiment in an 802.11 network the access node (or access point) may store the DL packets until the UE retrieves them. The access node may optionally refrain from indicating the availability of DL packets to the UE in the Traffic Indication Map (TIM) until the last beacon that is transmitted before the end of the accessibility period signalled by the user. Another embodiment, for example in an LTE access network, may make use of DRX configuration that minimize the number of active periods of the UE during the accessibility time, but ensures that one active period occurs at the end of the availability time.

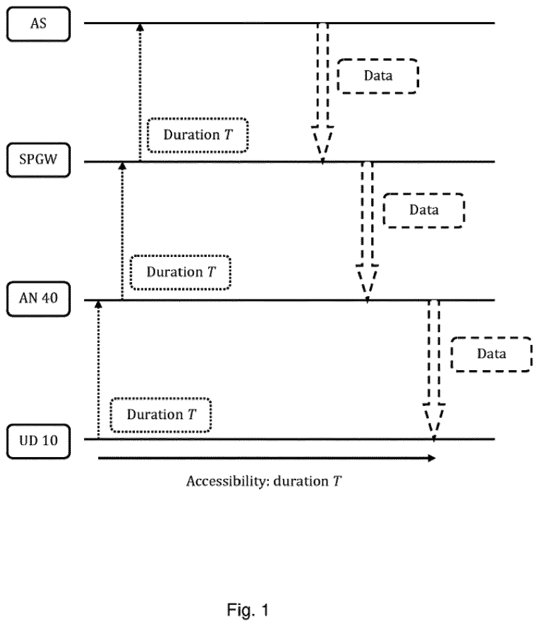

The data for the DL transmission can be stored in the access node until the end of the connection time as illustrated in Fig. 1. Instead of forwarding the data received from the Service Provider Gateway (SPGW) to the User Device (UD) 10 immediately the Access Node (AN) 40 waits until the end of the accessibility duration *T* before forwarding the data. In the example in Fig. 1 a SPGW is included as an intermediary node. Hence, Fig. 1 also illustrates the embodiment when the access node device forwards the first information element IE1, which indicates the duration *T,* to at least one network node of the system, which means that the first information element IE1 is propagated in the system. The at least one network node may be any network node in the group comprising: access node, gateway node, mobility management entity, and server node.

The drawbacks of storing the DL data for the user device until the end of the connection time is that it increases latency until the user device receives the response traffic and that the reduced reception time also reduces the amount of data that the user device can receive during one reception period. The preference of whether to be available for reception at the end of the connection period only, or to be connected during the whole period depends on the program application. For applications where a small amount of data is expected and energy consumption is an important constraint it may be preferred to only connect at the end of the time period *T* signalled by the user device, whereas applications which may generate transactions with multiple transmissions in either direction may be better served by being connected throughout the whole of the time period *T.* Since the information about the application is available in the user device this preference can also be included in the user device signalling with an additional bit that express this preference.

A further option is that the user device adds information about the time it expects to reconnect to the network in the signalling, which can be performed by an indication when in time the user device is accessible for data reception. This information would be useful for the network to know how long it shall keep DL packets for the user device. It can also be used for the network to determine how to manage the accessibility of the user device while it is not connected.

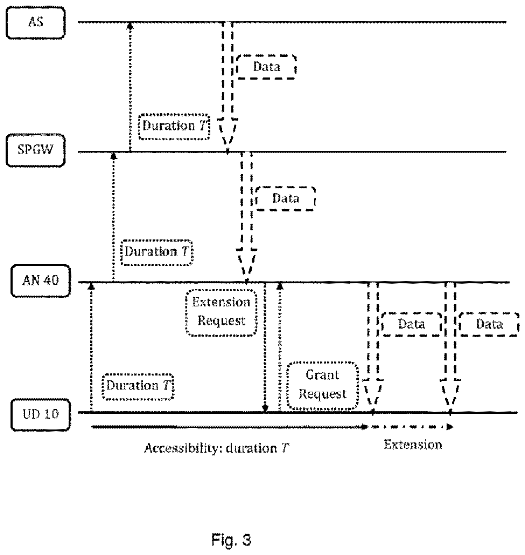

The connection time preference signalled by the user device is based on an estimate of how much time the transactions of the applications may need. However, since the user device may not know the delay which may be incurred in the servers and the network it should be possible to extend this period if needed. This could be done either by the network or the user device when it is found that the time will not be sufficient to finish the ongoing communications. Fig. 3 illustrates how the UD 10 first signals an accessibility duration to the AN 40 which forwards the IE1 with the duration *T* to a gateway (SPGW) and an application server (AS). The AN responds with data transmission towards the UD 10 which arrives at the AN 40. If the AN 40 does not have the possibility to transmit all the data during the time period *T* the access node could send a request for extension of the connection time to the user device in a communication signal as illustrated in Fig. 3, which could then respond with a confirmation or a rejection of the request. In the example in Fig. 3 the request is granted by the user device.

An alternative solution for the connection time extension would be to use a connection tail time that automatically releases the connection when there has not been any data sent during a specific time, e.g., a new timer could be initiated when a new packet transmission is made. The drawback of this solution is that it always requires the user device to keep connected for some time after the last packet which increases the energy consumption. Another possibility is to rely on technology specific mechanisms in the access network, e.g., indications about whether the access node has additional data to send or not.

Since the signalling of the present first information element IE1 can kept very compact it can be included as a field in existing or new communication protocols according to an embodiment. Many protocol specifications allow optional fields to be added in a protocol, which allows new information elements to be added in new releases of protocol specifications. One example of protocol where the proposed signalling may be added is Radio Resource Control (RRC) in 3GPP specifications. Another example is in IPv6, specified by IETF, where the information element may be contained in a header extension. A further example is S1 Application Protocol (S1AP) specified by 3GPP. It should however be noted that this is not a complete list of protocol that can be used and other protocols, such as Diameter, Session Initiation Protocol (SIP), Resource Reservation Protocol (RSVP), and other protocols may also include the proposed information element. It should further be noted that the network nodes on the path, e.g., an access node or a gateway node may need to copy the information element IE1 from one protocol to another, e.g., the access node may receive the information in an RRC message and copy it to a S1AP message.

Furthermore, the user device 10 may be able to derive the preferred mode and connection time based on the application(s) it is running. In some cases the user device may have a static usage pattern, e.g., a single purpose sensor node, then the preference could be preconfigured in the user device and the same information be used every time. In other cases the user devices have more varied usage patterns, and therefore needs to signal its preferences based on the applications and services that are active when the user device connects. Specifically the user device may take into account factors like how often its applications are sending data, e.g., heart beat or keep-alive messages that are used for the middle boxes and destination to maintain state information related to the user or polling messages for updates and if it is sending larger amounts of data each time or single packets.

From a practical point of view it is not trivial for the lower layers in the user device protocol stack to determine which applications that are running and the best configuration for the applications. In principle the lower layers in the user device could try to infer its preference from the higher layer protocols used. Since the higher layer protocols may not be visible to the lower layers due to encryption, it is preferable that the user device protocol stack indicates this preference towards lower layers. In principle simple rules could be applied, e.g., if TCP is used at the transport layer the user device may request a connection setup, or if a messaging application is used the user device may signal preference for no connection setup. More advanced policies would learn the typical behaviour of different applications and services and infer the best configuration for each application based on that information and the preference would need to be signalled from the operating system of the user device or from the applications.

A further improvement would be to consider how to select the preferred configuration when multiple applications or services are running so that the resulting multiplexed traffic pattern has to be considered. A simple policy is to select configuration based on the service that require the "most connected" state, i.e., the longest connection time and most frequent activity periods. Since the higher layer protocols may not be visible to the access network due to encryption, signalling this preference from the user device would be more accurate than relying on the access network to infer user device preferences.

Another aspect that the user device may take into account is its own mobility. With the present solution the user device can efficiently connect in different networks with a low signalling effort both for the network and for the user device. This allows the user device to use multiple different access networks and take control over its connectivity during mobility. If it is moving at high velocity relative to the coverage of an access node it may either choose a long term connection and rely on the access network to manage the mobility, or it may choose to connect during short periods where it will remain in the coverage of the same access node. When the user device would start using a new access node the temporary routing state would be added in that base station and at the mobility anchor, hence the mobility anchor could route the DL traffic correctly. It may also signal to the network about its expected mobility as another part of the first information element IE1. The mobility information may for example indicate if the user device expects high mobility or low mobility. It is clear to the skilled person that the signalling may indicate more levels of mobility in the first information element IE1.

According to yet another example of the invention, data packets can be sent using two different modes, a first mode in which the access network forwards packets over a default path with a minimum of processing of the packet, and a second mode where the forwarding of packets may be optimized in different ways, for example in terms of path, priority, encryption and error control. In the following the first mode is referred to as the stateless mode since the amount of state information in the access network is kept at an absolute minimum. In the stateless mode the packets are forwarded to a node which we will refer to as SPGW, which is not part of the access network. The system is designed so that the SPGW can belong to a service provider which has a low complexity technical interface with the access network, and can have a simple contract with the access network providers.

In the stateless transmission mode the access node forwards the packet to the SPGW using a default path with default QoS handling and without any additional encryption. The default path is determined based on unencrypted address information in the packet that is sufficient for the access network to infer the address of the SPGW which identifies the user device. Typically there will already be a security context between the user device and the SPGW so that the SPGW can decrypt the packet from the user device and read the user device identity. The SPGW applies policies to decide how the packets should be treated, in particular if they should be dropped or forwarded. The policies are based on the subscription data for the identified user device. The SPGW will also handle charging of the user device for the traffic. The choice of using stateless or stateful mode would be based on signalling from the user device as described above as well as on policies of the service provider. When the user device signals a preference for connectionless traffic the stateless mode could be selected, while the stateful transmission mode may be selected if the user device signals a preference for connection oriented according to an embodiment. The policies of the service provider may determine whether the user device is allowed to use the stateful mode or not. Therefore, according to this example the first information element IE1 further indicates whether data packets to, or from said user device 10 should be forward in a stateless mode over a first path being a default path, or in a stateful mode over a second path being determined by user and/or session specific information for said user device 10.

According to yet another embodiment the access network is connected to an Evolved Packet Core (EPC) network. The user device 10 connectivity preference signalling may therefore be included, e.g., in an Attach Request, Request Bearer Resource Modification or the Triggered Service Request message. As a result the access node (e.g., the eNB) and Mobility Management Entity (MME) may use the signalling from the user device in different EPS procedures related to the processes of address allocation, bearer establishment, etc. For example, DHCP has a possibility to include an IP address lease time in the DHCP request, and the connectivity preference value can be used to select the requested IP address lease time.

Also other procedures in the EPS could use the user device connectivity preference signalling to get potential enhancements, e.g., to make state soft, improve the resource management, optimize data paths, etc. For instance, network signalling overhead related to the Network Triggered Service Request procedure can be essentially reduced. When the Serving Gateway (S-GW) receives a downlink packet destined for an idle user device it does not have an eNB address to which it can send the packet for the user device. The S-GW instead informs the MME that a downlink packet has arrived (Downlink Data Notification message). The MME knows in which Tracking Area (TA) the user device is roaming and it should send a paging request to all eNBs within the TA lists to get the accessibility eNB address. In a case when the MME is informed about the user device connectivity preference signalling it should check whether the user device connection timer for incoming packets is expired or not. If it is still valid the paging procedure is not required and the MME informs the S-GW to form the data path for downlink packets towards the same eNB address.

The other case is when the user connectivity preference signalling is used to treat a certain application requiring a specific QoS demand and it is known when the application should be active, e.g., based on negotiation process with the SP. For this application a dedicated bearer should be established. The user device connectivity preference signalling also indicates the required time period for the application can be preceded, e.g. by the Attach Request. In this way the eNB is aware when the dedicated bearer should be activated. It can send the Request Bearer Recourse Modification instead of the user device when required to initiate the corresponding procedure, complete all required signalling exchange and form the data path beforehand by the time when the first packet from the application should arrive.

Moreover, route optimization in this case can be supported since the eNB can act on behalf of the user device and it is aware of what time the dedicated bearer should be activated. That is, the default bearer is established in a regular way as it is currently defined. However, the dedicated bearer for IP flow related to the application is not restricted to follow the hierarchical architecture (the eNB, the S-GW, the P-GW, the Application Server (AS)), and can be established directly between the eNB and the AS. If the request initiated by the eNB is accepted after interacting of the PDN-GW with Policy and Charging Rules Function (PCRF) the dedicated bearer is activated. Since the eNB knows the AS address direct uplink data path can be established between corresponding nodes. For the downlink data path the eNB should send its address information to the AS together with information about how long the attached user device can be available to get incoming packets related to this application. When the timer is expired the AS finishes sending the downlink packets and network resources are released.

Furthermore, when the access network is connected to a EPC, the information element IE1 signalled from the access node device to the user device can be embedded in an Attach Request, a Request Bearer Resource Modification, a Triggered Service Request or an Initial Context Setup Request message when signalled from a user device 10 and forwarded to additional nodes, such as an MME. This embodiment has also been explained above in the EPC context.

The access node device may further be arranged to transmit a second signal *S*₂ comprising a second information element IE2 to the user device 10. The second information element IE2 indicates a time extension of the accessibility for data reception by the user device 10. This second information element IE2 may also be forwarded to additional nodes, such as an MME or a gateway to inform about the extended connection time. In a EPC network this second information element IE2 may be included in a Request Bearer Resource Modification message.

In general, the present access node device is arranged to derive the first information element IE1 received from a user device as described above. However, according to an embodiment the access node is further arranged to transmit data to the user device according to the first information element IE1.

Furthermore, as understood by the person skilled in the art, the present invention also relates to corresponding methods in a user node and an access node. Any method according to the present invention may be implemented in a computer program, having code means, which when run by processing means causes the processing means to execute the steps of the method. The computer program is included in a computer readable medium of a computer program product. The computer readable medium may comprises of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that the present user device and access node device each comprises the necessary communication capabilities in the form of e.g., functions, means, units, elements, etc., for executing the present method. Examples of other such means, units, elements and functions are: processors, memory, encoders, decoders, mapping units, multipliers, interleavers, deinterleavers, modulators, demodulators, inputs, outputs, antennas, amplifiers, Rx unit, Tx unit, DSPs, MSDs, TCM encoder, TCM decoder, interfaces, communication protocols, etc. which are suitably arranged together.

Especially, the processors of the present user device or access node device may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the present invention is not limited to the embodiments described above, but also relates to and incorporates all embodiments within the scope of the appended independent claims.

## Claims

1. User device (10) arranged for communicating in a wireless communication system including at least one radio access network (20), the user device (10) comprising at least one processor (30) arranged to:
signal a first information element, IE1, to an access node device (40) of the at least one radio access network (20), said first information element, IE1, indicating an accessibility for data reception by said user device (10),
wherein said first information element, IE1, further indicates a time duration T of the accessibility for data reception by said user device (10),
wherein said first information element, IE1, further indicates whether said user device (10) is accessible for data reception during a whole of the time duration *T* or only in at least one time point of the time duration *T*.

2. User device (10) according to claim 1, wherein said first information element, IE1, further indicates whether said user device (10) prefers connection oriented or connectionless services.

3. User device (10) according to any of the preceding claims, wherein said first information element, IE1, further indicates whether data packets to, or from said user device (10) should be forward in a stateless mode over a first path being a default path, or in a stateful mode over a second path being determined by user and/or session specific information for said user device (10).

4. User device (10) according to any of the preceding claims, wherein said first information element, IE1, further indicates mobility information for said user device (10).

5. User device (10) according to any of the preceding claims, wherein said first information element, IE1, is determined based on program application(s) running on said user device (10).

6. User device (10) according to any of the preceding claims, wherein the radio access network (20) is connected to an Evolved Packet Core, EPC, and said first information element, IE1, is embedded in an Attach Request, Request Bearer Resource Modification or a Triggered Service Request message.

7. Access node device (40) of a radio access network, the access node device (40) comprising at least one processor (50) arranged to:
receive a first signal comprising a first information element, IE1, from a user device (10); and
process said first signal so as to derive said first information element, IE1, said first information element, IE1, at least indicating accessibility for data reception by said user device (10),
wherein said first information element, IE1, further indicates a time duration *T* of the accessibility for data reception by said user device (10),
wherein said first information element, IE1, further indicates whether said user device (10) is accessible for data reception during a whole of the time duration *T* or only in at least one time point of the time duration *T*.

8. Access node device (40) according to claim 7, further being arranged to:
transmit data to said user device (10) according to said first information element, IE1.

9. Access node device (40) according to claim 7, further being arranged to:
forward said first information element, IE1, to at least one network node in the group comprising: access node, gateway node, mobility management entity, and server node.

10. Access node device (40) according to claim 9, wherein the radio access network (20) is connected to an Evolved Packet Core, EPC, and said first information element, IE1, is embedded in an Attach Request, a Request Bearer Resource Modification, a Triggered Service Request or an Initial Context Setup Request message.

11. Access node device (40) according to any of claims 7-10, further being arranged to:
transmit a second signal comprising a second information element, IE2, to said user device (10), said second information element, IE2, indicating a time extension of the accessibility for data reception by said user device (10).

12. Method in a user device (10) arranged for communicating in a wireless communication system including at least one radio access network (20), the method comprising the step of:
signalling (100) a first information element, IE1, to an access node device (40) of the at least one radio access network (20), the first information element, IE1 indicating an accessibility for data reception by said user device (10),
wherein said first information element, IE1, further indicates a time duration *T* of the accessibility for data reception by said user device (10),
wherein said first information element, IE1, further indicates whether said user device (10) is accessible for data reception during a whole of the time duration *T* or only in at least one time point of the time duration *T*.

13. Method in an access node device (40) of a radio access network, the method comprising the steps of:
receiving (200) a first signal comprising a first information element, IE1, from a user device (10); and
processing (210) said first signal so as to derive said first information element, IE1, said first information element, IE1, at least indicating accessibility for data reception by said user device (10),
wherein said first information element, IE1, further indicates a time duration *T* of the accessibility for data reception by said user device (10),
wherein said first information element, IE1, further indicates whether said user device (10) is accessible for data reception during a whole of the time duration *T* or only in at least one time point of the time duration *T*.

## Patentansprüche

1. Benutzervorrichtung (10), die zur Kommunikation in einem drahtlosen Kommunikationssystem vorgesehen ist, das mindestens ein Funkzugangsnetzwerk (20) umfasst, wobei die Benutzervorrichtung (10) mindestens einen Prozessor (30) umfasst, der dazu vorgesehen ist:
ein erstes Informationselement IE1 an eine Zugangsknotenvorrichtung (40) des mindestens einen Funkzugangsnetzwerks (20) zu signalisieren, wobei das erste Informationselement IE1 eine Zugänglichkeit für den Datenempfang durch die Benutzervorrichtung (10) angibt,
wobei das erste Informationselement IE1 ferner eine Zeitdauer T der Zugänglichkeit für den Datenempfang durch die Benutzervorrichtung (10) angibt,
wobei das erste Informationselement IE1 ferner angibt, ob die Benutzervorrichtung (10) während der gesamten Zeitdauer T oder nur zu mindestens einem Zeitpunkt der Zeitdauer T für den Datenempfang zugänglich ist.

2. Benutzervorrichtung (10) nach Anspruch 1, wobei das erste Informationselement IE1 ferner angibt, ob die Benutzervorrichtung (10) verbindungsorientierte oder verbindungslose Dienste bevorzugt.

3. Benutzervorrichtung (10) nach einem der vorhergehenden Ansprüche, wobei das erste Informationselement IE1 ferner angibt, ob Datenpakete zu oder von der Benutzervorrichtung (10) in einem zustandslosen Modus über einen ersten Pfad, der ein Standardpfad ist, oder in einem zustandsorientierten Modus über einen zweiten Pfad, der durch eine benutzer- und/oder sitzungsspezifische Information für die Benutzervorrichtung (10) bestimmt wird, weitergeleitet werden sollen.

4. Benutzervorrichtung (10) nach einem der vorhergehenden Ansprüche, wobei das erste Informationselement IE1 ferner eine Mobilitätsinformation für die Benutzervorrichtung (10) angibt.

5. Benutzervorrichtung (10) nach einem der vorhergehenden Ansprüche, wobei das erste Informationselement IE1 basierend auf Programmanwendungen bestimmt wird, die auf der Benutzervorrichtung (10) ausgeführt werden.

6. Benutzervorrichtung (10) nach einem der vorhergehenden Ansprüche, wobei das Funkzugangsnetzwerk (20) mit einem evolvierten Paketkern (Evolved Packet Core, EPC) verbunden ist und das erste Informationselement IE1 in eine Verbindungsanforderungsnachricht, eine Anforderungsträger-Ressourcenmodifikationsnachricht oder eine ausgelöste Dienstanforderungsnachricht eingebettet ist.

7. Zugangsknotenvorrichtung (40) eines Funkzugangsnetzwerks, wobei die Zugangsknotenvorrichtung (40) mindestens einen Prozessor (50) umfasst, der dazu vorgesehen ist:
ein erstes Signal von einer Benutzervorrichtung (10) zu empfangen, das ein erstes Informationselement IE1 umfasst; und
das erste Signal zu verarbeiten, um so das erste Informationselement IE1 abzuleiten, wobei das erste Informationselement IE1 mindestens die Zugänglichkeit für den Datenempfang durch die Benutzervorrichtung (10) angibt,
wobei das erste Informationselement IE1 ferner eine Zeitdauer T der Zugänglichkeit für den Datenempfang durch die Benutzervorrichtung (10) angibt,
wobei das erste Informationselement IE1 ferner angibt, ob die Benutzervorrichtung (10) während der gesamten Zeitdauer T oder nur zu mindestens einem Zeitpunkt der Zeitdauer T für den Datenempfang zugänglich ist.

8. Zugangsknotenvorrichtung (40) nach Anspruch 7, die ferner dazu vorgesehen ist:
Daten an die Benutzervorrichtung (10) gemäß dem ersten Informationselement IE1 zu übertragen.

9. Zugangsknotenvorrichtung (40) nach Anspruch 7, die ferner dazu vorgesehen ist:
das erste Informationselement IE1 an mindestens einen Netzwerkknoten in der Gruppe weiterzuleiten, die umfasst: einen Zugangsknoten, einen Gateway-Knoten, eine Mobilitätsmanagementeinheit und einen Serverknoten.

10. Zugangsknotenvorrichtung (40) nach Anspruch 9, wobei das Funkzugangsnetzwerk (20) mit einem evolvierten Paketkern (Evolved Packet Core, EPC) verbunden ist und das erste Informationselement IE1 in eine Verbindungsanforderungsnachricht, eine Anforderungsträger-Ressourcenmodifikationsnachricht, eine ausgelöste Dienstanforderungsnachricht oder eine Anfangskontexteinrichtungsanforderungsnachricht eingebettet ist.

11. Zugangsknotenvorrichtung (40) nach einem der Ansprüche 7 bis 10, die ferner dazu vorgesehen ist:
ein zweites Signal an die Benutzervorrichtung (10) zu übertragen, das ein zweites Informationselement IE2 umfasst, wobei das zweite Informationselement IE2 eine Zeitverlängerung der Zugänglichkeit für den Datenempfang durch die Benutzervorrichtung (10) angibt.

12. Verfahren in einer Benutzervorrichtung (10), die zur Kommunikation in einem drahtlosen Kommunikationssystem vorgesehen ist, das mindestens ein Funkzugangsnetzwerk (20) enthält, wobei das Verfahren den folgenden Schritt umfasst:
Signalisieren (100) eines ersten Informationselements IE1 an eine Zugangsknotenvorrichtung (40) des mindestens einen Funkzugangsnetzwerks (20), wobei das erste Informationselement IE1 eine Zugänglichkeit für den Datenempfang durch die Benutzervorrichtung (10) angibt,
wobei das erste Informationselement IE1 ferner eine Zeitdauer T der Zugänglichkeit für den Datenempfang durch die Benutzervorrichtung (10) angibt,
wobei das erste Informationselement IE1 ferner angibt, ob die Benutzervorrichtung (10) während der gesamten Zeitdauer T oder nur zu mindestens einem Zeitpunkt der Zeitdauer T für den Datenempfang zugänglich ist.

13. Verfahren in einer Zugangsknotenvorrichtung (40) eines Funkzugangsnetzwerks, wobei das Verfahren die folgenden Schritte umfasst:
Empfangen (200) eines ersten Signals von einer Benutzervorrichtung (10), das ein erstes Informationselement IE1 umfasst; und
Verarbeiten (210) des ersten Signals, um so das erste Informationselement IE1 abzuleiten, wobei das erste Informationselement IE1 mindestens die Zugänglichkeit für den Datenempfang durch die Benutzervorrichtung (10) angibt,
wobei das erste Informationselement IE1 ferner eine Zeitdauer T der Zugänglichkeit für den Datenempfang durch die Benutzervorrichtung (10) angibt,
wobei das erste Informationselement IE1 ferner angibt, ob die Benutzervorrichtung (10) während der gesamten Zeitdauer T oder nur zu mindestens einem Zeitpunkt der Zeitdauer T für den Datenempfang zugänglich ist.

## Revendications

1. Dispositif d'utilisateur (10) conçu pour communiquer dans un système de communication sans fil comprenant au moins un réseau d'accès radio (20), le dispositif d'utilisateur (10) comprenant au moins un processeur (30) conçu :
pour signaler un premier élément d'information, IE1, à un dispositif de noeud d'accès (40) du ou des réseaux d'accès radio (20), ledit premier élément d'information, IE1, indiquant une accessibilité pour une réception de données par ledit dispositif d'utilisateur (10),
dans lequel ledit premier élément d'information, IE1, indique en outre une durée *T* de l'accessibilité pour une réception de données par ledit dispositif d'utilisateur (10),
dans lequel ledit premier élément d'information, IE1, indique en outre si ledit dispositif d'utilisateur (10) est accessible pour une réception de données pendant toute la durée *T* ou seulement pendant au moins un instant de la durée *T.*

2. Dispositif d'utilisateur (10) selon la revendication 1, dans lequel ledit premier élément d'information, IE1, indique en outre si ledit dispositif d'utilisateur (10) préfère des services orientés connexion ou sans connexion.

3. Dispositif d'utilisateur (10) selon l'une quelconque des revendications précédentes, dans lequel ledit premier élément d'information, IE1, indique en outre si des paquets de données audit dispositif d'utilisateur (10), ou en provenance de ce dernier, doivent être transmis dans un mode sans état sur un premier chemin qui est un chemin par défaut, ou dans un mode avec état sur un second chemin qui est déterminé par un utilisateur et/ou des informations spécifiques à une session pour ledit dispositif d'utilisateur (10).

4. Dispositif d'utilisateur (10) selon l'une quelconque des revendications précédentes, dans lequel ledit premier élément d'information, IE1, indique en outre des informations de mobilité pour ledit dispositif d'utilisateur (10).

5. Dispositif d'utilisateur (10) selon l'une quelconque des revendications précédentes, dans lequel ledit premier élément d'information, IE1, est déterminé sur la base d'une ou de plusieurs applications de programme s'exécutant sur ledit dispositif d'utilisateur (10).

6. Dispositif d'utilisateur (10) selon l'une quelconque des revendications précédentes, dans lequel le réseau d'accès radio (20) est connecté à un coeur paquet évolué (EPC) et ledit premier élément d'information, IE1, est incorporé dans une demande de rattachement, une modification de ressources de porteuse à la demande ou un message de demande de service déclenchée.

7. Dispositif de noeud d'accès (40) d'un réseau d'accès radio, le dispositif de noeud d'accès (40) comprenant au moins un processeur (50) conçu :
pour recevoir un premier signal comprenant un premier élément d'information, IE1, en provenance d'un dispositif d'utilisateur (10) ; et
pour traiter ledit premier signal de sorte à en tirer ledit premier élément d'information, IE1, ledit premier élément d'information, IE1, indiquant au moins une accessibilité pour une réception de données par ledit dispositif d'utilisateur (10),
dans lequel ledit premier élément d'information, IE1, indique en outre une durée *T* de l'accessibilité pour une réception de données par ledit dispositif d'utilisateur (10),
dans lequel ledit premier élément d'information, IE1, indique en outre si ledit dispositif d'utilisateur (10) est accessible pour une réception de données pendant toute la durée *T* ou seulement pendant au moins un instant de la durée *T.*

8. Dispositif de noeud d'accès (40) selon la revendication 7, étant en outre conçu :
pour transmettre des données audit dispositif d'utilisateur (10) en fonction dudit premier élément d'information, IE1.

9. Dispositif de noeud d'accès (40) selon la revendication 7, étant en outre conçu :
pour faire parvenir ledit premier élément d'information, IE1, à au moins un noeud de réseau dans le groupe comprenant : un noeud d'accès, un noeud de passerelle, une entité de gestion de mobilité et un noeud de serveur.

10. Dispositif de noeud d'accès (40) selon la revendication 9, dans lequel le réseau d'accès radio (20) est connecté à un coeur paquet évolué (EPC) et ledit premier élément d'information, IE1, est incorporé dans une demande de rattachement, une modification de ressources de porteuse à la demande, une demande de service déclenchée ou un message de demande de configuration de contexte initial.

11. Dispositif de noeud d'accès (40) selon l'une quelconque des revendications 7 à 10, étant en outre conçu :
pour transmettre un second signal comprenant un second élément d'information, IE2, audit dispositif d'utilisateur (10), ledit second élément d'information, IE2, indiquant une prolongation de temps de l'accessibilité pour une réception de données par ledit dispositif d'utilisateur (10).

12. Procédé dans un dispositif d'utilisateur (10) conçu pour communiquer dans un système de communication sans fil comprenant au moins un réseau d'accès radio (20), le procédé comprenant les étapes consistant :
à signaler (100) un premier élément d'information, IE1, à un dispositif de noeud d'accès (40) du ou des réseaux d'accès radio (20), le premier élément d'information, IE1, indiquant une accessibilité pour une réception de données par ledit dispositif d'utilisateur (10),
dans lequel ledit premier élément d'information, IE1, indique en outre une durée *T de* l'accessibilité pour une réception de données par ledit dispositif d'utilisateur (10),
dans lequel ledit premier élément d'information, IE1, indique en outre si ledit dispositif d'utilisateur (10) est accessible pour une réception de données pendant toute la durée *T* ou seulement pendant au moins un instant de la durée *T.*

13. Procédé dans un dispositif de noeud d'accès (40) d'un réseau d'accès radio, le procédé comprenant les étapes consistant :
à recevoir (200) un premier signal comprenant un premier élément d'information, IE1, en provenance d'un dispositif d'utilisateur (10) ; et
à traiter (210) ledit premier signal de sorte à en tirer ledit premier élément d'information, IE1, ledit premier élément d'information, IE1, indiquant au moins une accessibilité pour une réception de données par ledit dispositif d'utilisateur (10),
dans lequel ledit premier élément d'information, IE1, indique en outre une durée *T de* l'accessibilité pour une réception de données par ledit dispositif d'utilisateur (10),
dans lequel ledit premier élément d'information, IE1, indique en outre si ledit dispositif d'utilisateur (10) est accessible pour une réception de données pendant toute la durée *T* ou seulement pendant au moins un instant de la durée *T.*
